# EUROPEAN PATENT SPECIFICATION

(11) **EP 3 050 183 B1**
(45) Date of publication and mention of the grant of the patent: **13.05.2020**
(21) Application number: 13894166.1
(22) Date of filing: 29.09.2013
(51) Int. Cl.: H02G 5/02, H02G 5/10

(54) **MAIN BUS-BAR, BRANCH BUS-BAR, TRANSFER CONNECTOR AND BUS-BAR ASSEMBLY**
HAUPTSAMMELSCHIENE, VERZWEIGTE SAMMELSCHIENE, ÜBERTRAGUNGSVERBINDER UND SAMMELSCHIENENANORDNUNG
BARRE OMNIBUS PRINCIPALE, BARRE OMNIBUS DE DÉRIVATION, CONNECTEUR DE TRANSFERT ET JEU DE BARRES OMNIBUS

(43) Date of publication of application: 03.08.2016
(73) Proprietor: ABB Schweiz AG, 5400 Baden (CH)
(72) Inventor: YANG, Changzhou, Xiamen Fujian 361006 (CN); ZHANG, Yang, Xiamen Fujian 361006 (CN); HUANG, Liqun, Xiamen Fujian 361006 (CN); WANG, Delong, Xiamen Fujian 361012 (CN); LIU, Xiaodong, Xiamen Fujian 361006 (CN); YAN, Congming, Xiamen Fujian 361112 (CN); WANG, Zhe, Xiamen Fujian 361004 (CN); ZHANG, Xin, Xiamen Fujian 361026 (CN)
(74) Representative: Zimmermann & Partner Patentanwälte mbB
(86) International application number: PCT/CN2013/084643
(87) International publication number: WO 2015/042927

(56) References cited:
- EP-A2- 2 346 131
- WO-A2-2007/103313
- CN-A- 101 383 489
- CN-Y- 201 000 773
- DE-A1- 1 465 290
- KR-B1- 100 631 469
- KR-B1- 100 631 469
- US-A- 1 574 993
- US-A- 2 400 223
- US-A- 2 469 073
- US-A1- 2004 118 589
- US-A1- 2012 318 560

## Description

### FIELD OF THE INVENTION

Embodiments of the present disclosure generally relate to the field of power products, and more particularly relate to a main bus-bar, a branch bus-bar, and a bus-bar assembly.

### BACKGROUND OF THE INVENTION

Currently, a main bus-bar is widely used to transmit power from the outside power supply to various electrical components in a power distribution cabinet or a switchgear. A shape of a cross section of an existing main bus-bar is always hollowly rectangular or circular. Such a main bus-bar is always used in switching devices.

The rectangular bus-bar has a simple shape, and is easy to manufacture, but has poor mechanical bending strength. The amount of current carried by the rectangular bus-bar is also relatively small due to "skin effect" and "proximity effect" of the current. Moreover, the outside heat radiating surface of the rectangular bus-bar is small and not good enough to facilitate radiating of heat. When it is used as a large current bus-bar, relatively more materials and more space are needed. Additionally, there is a risk of point discharge due to the poor space electric field of the rectangular bus-bar.

The hollow circular bus-bar has a good mechanical bending strength, and materials for manufacturing it can be saved because of the hollow inside while the amount of current carried by such a bus-bar will not be affected. It can achieve a better space electric field than the above described rectangular bus-bar. However, the hollow circular bus-bar accompanies with remarkable inside heat accumulation. Since the inside heat radiating surface can not be sufficiently used, the temperature rising of certain key position within a power loop is probably to be increased.

Further, a branch bus-bar (sometimes referred to as tee-off device) is widely used to connect the main bus-bar to one of various electrical components in the power distribution cabinet. Patent document DE 14 65 290 refers to a multi-phase high current connection. The Korean patent KR 100 631 469 B1 describes a bus-bar connecting structure of distribution board for an apartment house and patent document US 2 400 223 A describes an electric bus-bar construction. The existing branch bus-bar has a rectangular shape and consists of a first flat portion and a second flat portion. The second portion is joined with the first flat portion at one transverse end. In practices, the first portion is attached to a flat surface of the planar main bus-bar (e.g., the rectangular main bar-bus), and the second portion is fixed to a certain electrical component. However, due to the structure of the branch bus-bar, the branch bus-bar is only applicable to be attached to the planar main bus-bar.

### SUMMARY OF THE INVENTION

In view of the foregoing, it is an objective of the present disclosure to provide a novel bus-bar assembly which can solve or at least partially mitigate at least a part of problems in the prior art.

The present disclosure further provides a novel bus-bar assembly comprising a main bus-bar.

Further described is a transfer connector operable to connect the above-mentioned main bus-bar to a planar bus-bar as an example useful for understanding the invention.

According to the invention a bus-bar assembly according to claim 1 is provided.

In another embodiment of the present disclosure, the width of said first elongated flat portion may be equal to that of said second elongated flat portion.

In a further embodiment of the present disclosure, the other longitudinal side (27) of at least one of the first elongated flat portion and the second elongated flat portion, opposite to the joint area, is provided with a rounded flange. The thickness of the rounded flange is wider than the thickness of the rest of the respective elongated flat portion. Preferably, the rounded flange is provided with an internal groove.

In a yet embodiment of the present disclosure, a longitudinal end of the first elongated flat portion and/or a longitudinal end of the second elongated flat portion are rounded.

In a yet embodiment of the present disclosure, the joint area formed between said first elongated flat portion and said second elongated flat portion is rounded.

In a yet embodiment of the present disclosure, a groove is provided at an end of the joint area formed between said first elongated flat portion and said second elongated flat portion.

In a yet embodiment of the present disclosure, a middle segment of said first elongated flat portion and/or said second elongated flat portion is coated with an electrical insulation composite.

In a yet embodiment of the present disclosure, a longitudinal end of the first elongated flat portion and/or a longitudinal end of the second elongated flat portion are provided with one or more first through-holes in which a thread is provided, and said bending segments are provided with one or more second embedded through-holes with a thread therein, and the respective elongated flat portion of the main bus-bar is arranged to be attached to the respective bending segment of the branch bus-bar via the respective first and second through-holes by means of a bolt structure.

According to a third aspect of the present disclosure, there is also provided a bus-bar system comprising two bus-bar assemblies as stated in the second aspect. At least one of the first elongated flat portion and the second elongated flat portion of the main bus-bar of the first bus-bar assembly is arranged to be parallel to respective one of the first elongated flat portion and the second elongated flat portion of the main bus-bar of the second bus-bar assembly.

In embodiments of the present disclosure, a thickness of each of said first connector elongated flat portion and said second connector elongated flat portion is non-uniform.

In another embodiment of the present disclosure, said one flat surface is provided with one or more first embedded through-holes with a thread therein, and a side of said one or more first embedded through-holes opposite to said one flat surface is another flat surface.

Preferably, the thread is implemented by an embedded nut.

Preferably, the other flat surface is lower than a joint area of the first connector elongated flat portion and the second connector elongated flat portion.

Preferably, the other flat surface is formed as a surface for sank holes.

Preferably, the other flat surface is formed without damaging the joint area formed between said first connector elongated flat portion and said second connector elongated flat portion.

In a yet embodiment of the present disclosure, a longitudinal end of the first elongated flat portion and/or a longitudinal end of the second elongated flat portion are provided with one or more second embedded through-holes in which a thread is provided, and a longitudinal end of the first connector elongated flat portion and/or a longitudinal end of the second connector elongated flat portion are provided with one or more third embedded through-holes in which a thread is provided. The respective elongated flat portion of the main bus-bar is attached to the respective connector elongated flat portion of the transfer connector via the second and third embedded through-holes by means of a bolt structure.

In a yet embodiment of the present disclosure, the one flat surface is attached to the other portion of said two or more planar portions via said first through-holes and through-holes in the other portion by means of a bolt structure.

In a yet embodiment of the present disclosure, the joint area formed between said first connector elongated flat portion and said second connector elongated flat portion is rounded.

In a yet embodiment of the present disclosure, a longitudinal end of the first connector elongated flat portion and/or a longitudinal ends of the second connector elongated flat portion are rounded.

According to a fifth aspect of the present disclosure, there is also provided a bus-bar system comprising two bus-bar assemblies as stated in the fourth aspect. At least one of the first elongated flat portion and the second elongated flat portion of the main bus-bar of the first bus-bar assembly is arranged to be parallel to respective one of the first elongated flat portion and the second elongated flat portion of the main bus-bar of the second bus-bar assembly.

According to an example useful for understanding the embodiments, there is also described a transfer connector for connecting a main bus-bar with a branch bus-bar, comprising a first connector elongated flat portion and a second connector elongated flat portion. A longitudinal side of the first connector elongated flat portion and a longitudinal side of the second connector elongated flat portion are arranged to be joined with each other at a predetermined angle. The first connector elongated flat portion is adapted to be attached to a first elongated flat portion of a main bus-bar, and the second connector elongated flat portion is adapted to be attached to a second elongated flat portion of the main bus-bar. One flat surface is provided between the first connector elongated flat portion and the second connector elongated flat portion and is adapted to be attached to a branch bus-bar.

According to embodiments of the present disclosure, a V-shaped main bus-bar (although not accurate enough) is provided. Unlike the existing various planar main bus-bars, the inside radiating surface of the V-shaped main bus-bar can be sufficient used; and the V-shaped main bus-bar has a good space electric field and can avoid point discharge when used in pairs. In case of the same amount of current carried by main bus-bars, the V-shaped main bus-bar has the best mechanical bending strength and the best dynamic stability, and needs the minimum materials to manufacture, compared with, e.g., the above-mentioned rectangular bus-bar, hollow circular bus-bar.

According to embodiments of the present disclosure, it can also solve the challenge of using the new V-shape bus-bar with the existing flat surface branch bus-bar.

### BRIEF DESCRIPTION OF THE DRAWINGS

The above and other features of the present disclosure will become more apparent through detailed explanation on the embodiments as illustrated in the description with reference to the accompanying drawings, throughout which like reference numbers represent same or similar components and wherein:
Figs. 1A and 1B schematically illustrate perspective views of two V-shaped main bus-bars according to an example useful for understanding the present disclosure;
Figs. 2A schematically illustrate a side view of the V-shaped main bus-bars illustrated in Figs. 1A and 1B;
Figs. 2B -2E schematically illustrate four side views of the V-shaped main bus-bars according to embodiments described herein;
Figs. 3A and 4A schematically illustrate arrangements of a pair of the V-shaped main bus-bars illustrated as an example useful for understanding the invention;
Figs. 3B-3E and 4B-4E schematically illustrate arrangements of a pair of the V-shaped main bus-bars illustrated in Figs. 2B-2E;
Fig. 5 schematically illustrates perspective views of four branch bus-bars according to embodiments of the present disclosure;
Fig. 6 schematically illustrates a perspective view of a transfer connector according to an example useful for understanding the embodiments of the present disclosure;
Fig. 7 schematically illustrates perspective views of other transfer connectors according to an example useful for understanding the embodiments of the present disclosure;
Fig. 8 schematically illustrates a perspective view of a unilateral attaching arrangement between a pair of V-shaped main bus-bar illustrated as an example useful for understanding the invention and a branch bus-bar, according to a embodiment of the present disclosure;
Fig. 9 schematically illustrates a side view of the attaching arrangement illustrated in Fig. 8;
Fig. 10 schematically illustrates a perspective view of another unilateral attaching arrangement between a V-shaped main bus-bar illustrated as an example useful for understanding the invention and a branch bus-bar, according to a embodiment of the present disclosure;
Fig. 11 schematically illustrates a side view of the attaching arrangement illustrated in Fig. 10;
Fig. 12 schematically illustrates a perspective view of a bilateral attaching arrangement between a V-shaped main bus-bar illustrated as an example useful for understanding the invention and a branch bus-bar, according to a embodiment of the present disclosure;
Fig. 13 schematically illustrates a side view of the attaching arrangement illustrated in Fig. 12;
Fig. 14 schematically illustrates a perspective view of a attaching arrangement using a transfer connector between a V-shaped main bus-bar illustrated as an example useful for understanding the invention and a branch bus-bar, according to a embodiment of the present disclosure; and
Fig. 15 schematically illustrates a side view of the attaching arrangement illustrated in Fig. 14.

### DETAILED DESCRIPTION OF EMBODIMENTS

Hereinafter, embodiments of the present disclosure will be explained in more details with reference to the above accompanying drawings. It should be appreciated that these embodiments are presented only to enable those skilled in the art to better understand and implement the present disclosure, not intended to limit the scope of the present disclosure in any manner.

Generally, all terms used in the claims are to be interpreted according to their ordinary meaning in the technical field, unless explicitly defined otherwise herein. All references to "a/an/the/said [element, device, component, means, step, etc]" are to be interpreted openly as referring to at least one instance of said element, device, component, means, unit, step, etc., without excluding a plurality of such devices, components, means, units, steps, etc., unless explicitly stated otherwise. Besides, the indefinite article "a/an" as used herein does not exclude a plurality of such steps, units, modules, devices, and objects, and etc.

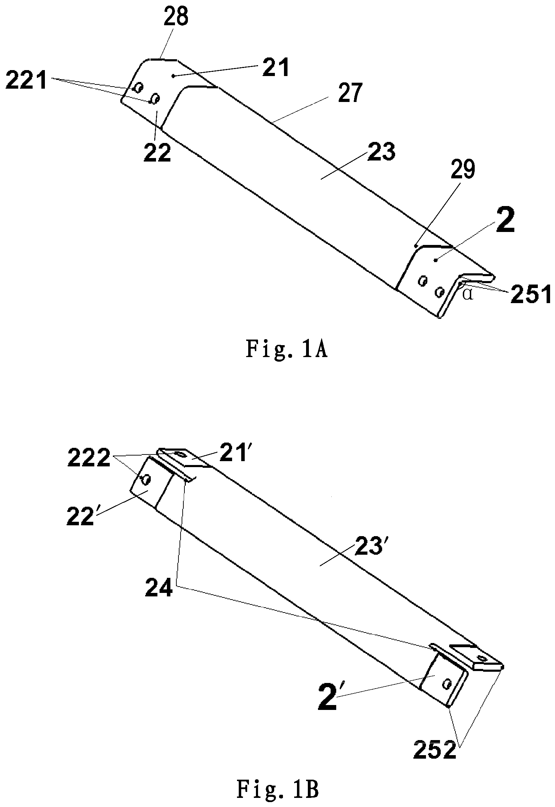

Figs. 1A and 1B schematically illustrates perspective views of two V-shaped main bus-bars 2 and 2' according to an example useful for understanding the present invention.

In Fig. 1A, a main bus-bar 2 consists of a first elongated flat portion 21 and a second elongated flat portion 22. In Fig. 1B, a main bus-bar 2' consists of a first elongated flat portion 21' and a second elongated flat portion 22' joined with each other. A longitudinal side of the first elongated flat portion 21 (or 21') and a longitudinal side of the second elongated flat portion 22 (or 22') are arranged to be joined with each other at a predetermined angle (α), with a joint area 29 being formed between the first elongated flat portion 21 and the second elongated flat portion 22. The joint area 29 includes an internal surface and an external surface, wherein the internal surface is formed by the joint of the internal surface of the first elongated flat portion 21 and the internal surface of the second elongated flat portion 22, and the external surface is formed by the joint of the external surface of the first elongated flat portion 21 and the external surface of the second elongated flat portion 22.

By way of an example, the angle α formed by the first elongated flat portion 21 (or 21') and the second elongated flat portion 22 (or 22'), i.e., the angle between the internal (or external) surface of the first elongated flat portion and the internal (or external) surface of the second elongated flat portion, is shown as an obtuse angle in Figs. 1A and 1B. However, as will be appreciated by those skilled in the art, the first elongated flat portion 21 (or 21') and the second elongated flat portion 22 (or 22') could also be joined at any other suitable angles, e.g. a right angle or a sharp angle.

In implementations, the V-shaped main bus-bars 2 or 2' as described herein may be manufactured by bending, casting, molding and any other appropriate mechanical manufacture methods.

In an example useful for understanding embodiments described herein, when the main bus-bar 2 (2') illustrated in Fig. 1A (or 1B) is utilized to transmit power from a power supply to a component in a power distribution cabinet (not shown), it can be connected with the power supply at one end of the elongated flat portions 21 (or 21') and 22 (22') and connected with a branch bus-bar at the other end of the elongated flat portions 21 (or 21') and 22 (22') for connecting to an electrical component.

Preferably, the main bus-bar 2 as described herein may be provided with several through-holes at end(s) of the elongated flat portions to make the fixing with the power supply or the electrical component more flexibly and easier, e.g., by means of a bolt structure. Optionally, a thread may be provided in every through-hole to improve the fixing strength. The through-holes are illustrated in Figs. 1A and 1B as through-holes 221 and 222. It is to be noted that the position and the number of the through-holes depends on a particular implementation to obtain an appropriate fixing.

For example, in Fig. 1A, two holes 221 is positioned at one end of the elongated flat portion 22 but no holes at the opposite end of the elongated flat portion 21. In Fig. 1B, one hole 222 is positioned at one end of the elongated flat portion 21' and another hole is positioned at one opposite end of the elongated flat portion 22'.

In a preferable embodiment, taking the main bus-bar 2 as an example, the joint area 29 between the first elongated flat portion 21 and the second elongated flat portion 22 may be rounded, as can be better seen from the end 251 of the joint area, in order to facilitate decreasing of the skin effect and the uniformity of the electric field, which are caused by the current carried in the main bus-bar 2.

In another preferable embodiment, taking the main bus-bar 2 as an example, a longitudinal end of the first elongated flat portion 21 and a longitudinal end of the second elongated flat portion 22, and/or a longitudinal side opposite to the joint area 29, may be rounded, in order to further facilitate the decreasing of the skin effect and the uniformity of the electric field, which are caused by the current carried in the main bus-bar.

In an embodiment, at least one end of the joint area 29 may be provided with a groove 24, in order to obtain a more closely attachment to a power supply or a branch bus-bar. Moreover, such a groove facilitates to compensate the manufacture tolerance of the main bus-bar and the branch bus-bar to be met.

In an embodiment, the middle segment of the V-shaped main bus-bar 2 may be coated with an electrical insulation composite 23, such as epoxy coating, to provide insulation protection to the main bus-bar. Compared to the existing insulation solutions with an insulation sleeve, the cost and volume of the V-shaped main bus-bar can be reduced due to the use of the electrical insulation composite. It will be appreciated that any other appreciate electrical insulation composite may be used to coat the V-shaped main bus-bar to provide insulation protection.

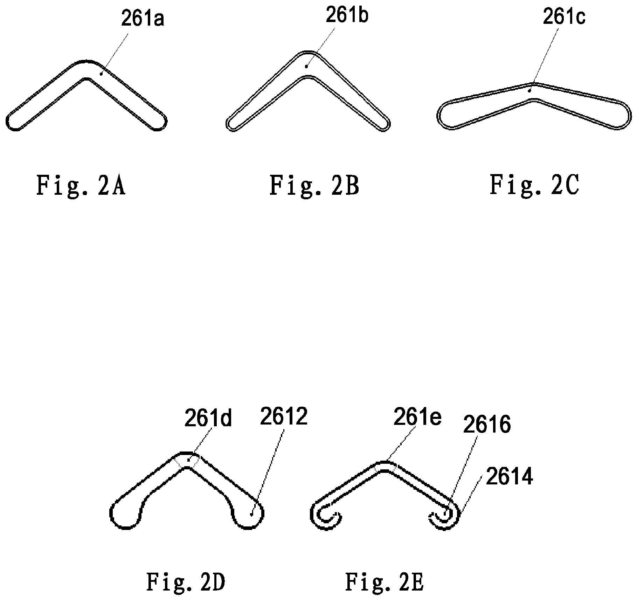

Fig. 2A schematically illustrates a cross section 261a of the V-shaped main bus-bar illustrated in Figs. 1A and 1B. As can be seem from the cross section 261a in Fig.2A, the thickness of the first elongated flat portion 21 and the second elongated flat portion 22 is uniform. This is an example useful for understanding the embodiments described herein and is an implementation of a V-shaped main bus-bar. However, in embodiments described herein, the thickness of the first elongated flat portion 21 or the second elongated flat portion 22 is non-uniform; in particular, the said thickness besides the joint area 29 is non-uniform. Preferable embodiments of the cross section 261b-261e are provided herein, as shown in Figs. 2B-2E.

In Fig. 2B, the thickness of the first elongated flat portion 21 and the second elongated flat portion 22 is gradually increased away from the joint area. That is, the thickness of the middle portion in the cross section is larger than that of ends in cross section 261b. Alternatively and conversely, in Fig. 2C, the thickness of the first elongated flat portion 21 or the second elongated flat portion 22 is gradually decreased away from the joint area.

In Figs. 2D and 2E, the end of the first elongated flat portion and/or the second elongated flat portion, opposite to the joint area, is provided with a rounded flange 2612 (or 2614). In Fig. 2D, the thickness of the rounded flange is wider than the thickness of the other part of the elongated flat portions. In Fig. 2E, there is a groove 2616 in the rounded flange.

Advantageously, the skin effect and proximity effect of current carried in the V-shaped main bus-bar can be substantially reduced according to embodiments of Figs. 2B-2E.

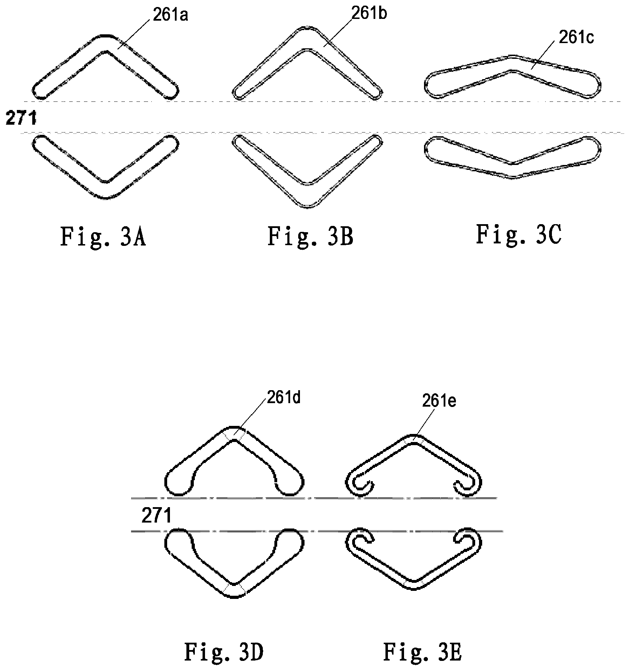

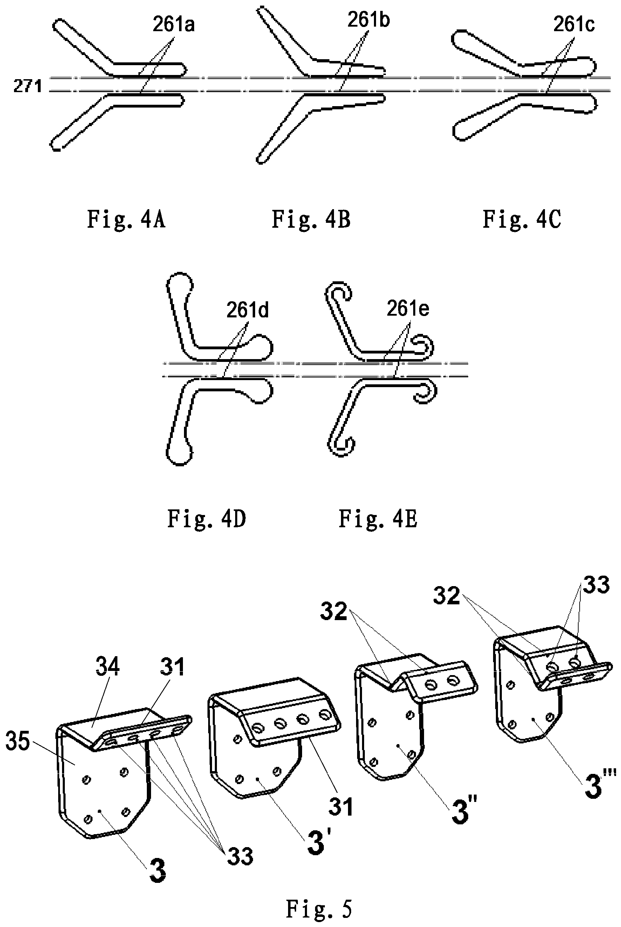

In particular implementations of the V-shape main bus-bar, a V-shaped main bus-bar may be arranged in pairs, for example, in a way of face to face at openings of the pair of the V-shaped main bus-bars, or in a way of back to back at unilateral side of the pair of the V-shaped main bus-bars, in order to achieve a better effect of transmitting power, as showed in Figs. 3A-3E and 4A-4E. Figs. 3A-3E schematically illustrate the face to face arrangements of pairs of the V-shaped main bus-bars illustrated in Figs. 2A-2E, respectively, with an interval 271 between the pairs of the V-shaped main bus-bars. Figs. 4A-4E schematically illustrate the unilateral back to back arrangements of pairs of the V-shaped main bus-bars illustrated in Figs. 2A-2C, respectively, with an interval 271 between the respective elongated flat portions of the pairs of the V-shaped main bus-bars.

Advantageously, the V-shaped main bus-bar proposed in this disclosure has more internal and external surface for radiating heat, thus the heat accumulation existed in the hollow circular bus-bar can be effectively avoided. Moreover, the material needed to manufacture is substantially lower than the existing planar main bus-bar (e.g., the rectangular, the hollow circular main bus-bar) when experiencing the same current strength. For example, if the V-shaped main bus-bar with a certain current carrying capacity is manufactured by a Cu material, the total cost can be reduced greatly compared with the traditional main bus-bar.

The V-shaped main bus-bar also has an ability of avoiding the point discharge. At the same time, the V-shaped main bus-bar can advantageously overcome the skin effect by means of the joint area, formed as a bending line, between the two elongated flat portions.

Next, reference will be made to Fig. 5 to describe an exemplary structure of the branch bus-bars according to embodiments of the present disclosure.

In Fig. 5, perspective views of four branch bus-bars 3, 3', 3" and 3"' are shown. One end of the branch bus-bars comprises one or more planar portions 34 and 35, and is provided with one or two bending segments 31 or 32, in order to be applicable to attach to the V-shaped main bus-bar at one side 21 or at two sides 21 and 22, e.g., by means of a bolt structure or welding. In implementations, the bending segments 31 and 32 may be made by means of a bending way or an extrusion molding way.

By way of example, a first portion 34 is substantially perpendicularly fixed to a second portion 35 at a transverse end thereof, as shown in Fig. 5. However, it should be noted that other angles between them except the right angle is appropriate depending on the position between a V-shaped main bus-bar and an electrical component to be connected with the branch bus-bars.

The branch bus-bars as illustrated in Fig. 5 can be regarded as the improvements of a existing planar branch bus-bar, which consists of a thickness-uniform first portion 34 and a thickness-uniform second portion 35, with further bending segment(s) being provided at the first portion. Further, those skilled in the art will understand that only one planar portion, in place of the existing planar branch bus-bar comprising two portions 34 and 35, is also feasible to connect an electrical component in some circumstances, although the existing planar branch bus-bar is shown to illustrate the proposed branch bus-bar herein.

Preferably, the bending segments 31 and 32 may be provided with several through-holes to make the fixing with the V-shaped main bus-bar more flexibly and easier, e.g., by a bolt structure. Optionally, a thread may be provided in every through-hole to improve the fixing strength. The through-holes are illustrated in Fig. 5 as holes 33. It is to be noted that the position and the number of the through-holes may depends on a particular implementation to obtain an appropriately fixed connection.

Preferably, the thickness of the bending segments 31 and 32 may be non-uniform to match the thickness of a V-shaped main bus-bar to be fixed to. In an example, the thickness of the bending segment 31 may be gradually increased outward, or the thickness of the bending segment 31 may be gradually decreased outward. In another example, the thickness of the two bending segments 32 may be gradually increased away from the joint area between the two bending segments, or the thickness of the two bending segments 32 may be gradually decreased away from the joint area between the two bending segments.

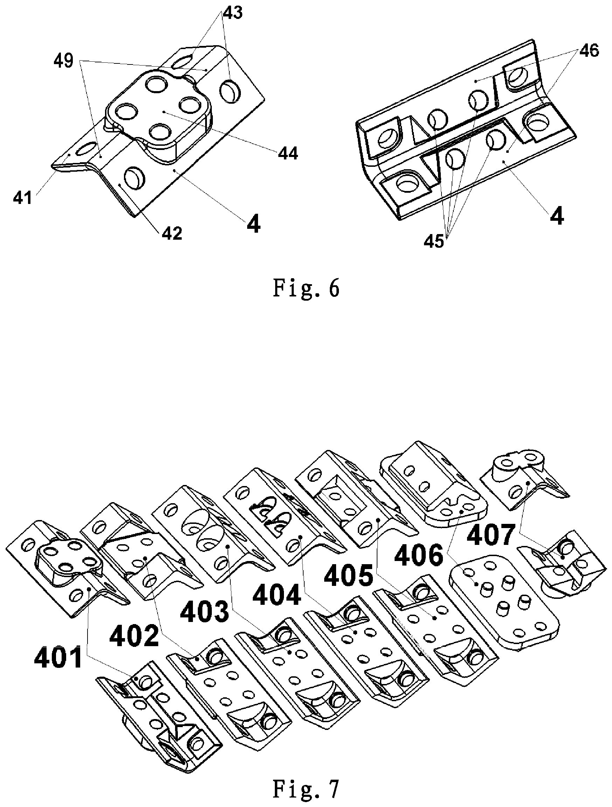

Next, reference will be made to Fig. 6 to describe an exemplary structure of a transfer connector 4 according to an example useful for understanding the embodiments of the present disclosure. The left part illustrates the transfer connector 4 seen from top to down, while the right part illustrates the transfer connector 4 seen from down to top.

In Fig. 6, a transfer connector 4 is shown. The transfer connector 4 comprises a first connector elongated flat portion 41 and a second connector elongated flat portion 42. A longitudinal side of the first connector elongated flat portion 41 and a longitudinal side of the second connector elongated flat portion 42 are arranged to be joined with each other at a predetermined angle and fixed, with an joint area 49 being formed between the first connector elongated flat portion 41 and the second connector elongated flat portion 42. The first connector elongated flat portion 41 and the second connector elongated flat portion 42 are further shaped to have at least one flat surface 46 or 44 (hereinafter referred as a attaching surface) formed between them for attaching to a flat surface of a branch bus-bar.

It is should be noted that the angle formed by the first connector elongated flat portion 41 and the second connector elongated flat portion 42 may be a sharp angle, a right angle or an obtuse angle so as to perfectly meet with a V-shaped main bus bar. Additionally, It is should be noted that the thickness of the first connector elongated flat portion 41 and the second connector elongated flat portion 42 is non-uniform to perfectly match the thickness of the V-shaped main bus-bar to be fixed with to make the attachment between them tight.

In an example, the transfer connector 4 may be attached with a V-shaped main bus-bar at one end of the elongated flat portions 41 and 42, and be attached with a branch bus-bar at the attaching surface 46.

In an example useful for understanding the embodiments, the transfer connector 4 may be provided with several through-holes at ends of the elongated flat portions 41 and 42 to make the fixing with the V-shaped main bus-bar more flexibly and easier, e.g., by means of a bolt structure. Optionally, a thread may be provided in every through-hole. The through-holes are illustrated in Fig. 6 as holes 43. It is to be noted that the position and the number of the through-holes may depend on a particular implementation to obtain an appropriately fixed connection.

In an example for understanding the embodiments, the transfer connector 4 may be provided with several through-holes 45 at the flat surfaces 46 formed between the elongated flat portions 41 and 42 to make the fixing with a flat surface of a planar branch bus-bar more flexibly and easier, e.g., by means of a bolt structure. The through-holes are illustrated in Fig. 6 as holes 45. It is to be noted that the position and the number of the through-holes may depend on a particular implementation to obtain an appropriately fixed connection. Optionally, a thread may be provided in every through-hole.

Preferably, the opposite side of the through-holes 45 to the attaching surface 46 is a flat surface 44 (hereinafter referred as a fastening surface), which could be used with one or more fastening elements, e.g., screws and nuts for fastening a bolt structure in the through-holes, so as to make attaching between the transfer connector 4 and a planar branch bus-bar more easier.

In an example, similar with the Fig. 1, the joint areas 49 between the first connector elongated flat portion 41 and the second connector elongated flat portion 42 may be rounded in order to facilitate the decreasing of the skin effect and the uniformity of the electric field, which are caused by the current carried in the main bus-bar.

In another example, a longitudinal end of the first connector elongated flat portion 41 and a longitudinal end of the second connector elongated flat portion 42, and/or a longitudinal side opposite to the above noted joint area 49, may be rounded, in order to further facilitate the decreasing of the skin effect and the uniformity of the electric field, which are caused by the current carried in the main bus-bar.

In Fig. 6, the flat attaching surfaces 46 are formed as two parts, but it is also appreciated that the flat surfaces 46 may be formed as one whole part. Alternatively, the flat surface 44 may also be formed as several parts. In Fig. 6, the flat attaching surfaces 46 are formed inside between the first connector elongated flat portion 41 and the second connector elongated flat portion 42, but it is also appreciated that the flat attaching surface 46 may be formed outside between the first connector elongated flat portion 41 and the second connector elongated flat portion 42. Other suitable modifications of the transfer connector 4 are shown in Fig. 7 and probable modifications of it are not limited to those shown in Fig. 7, as can be appreciated by those skilled in the art.

Fig. 7 schematically illustrates perspective views of seven probable transfer connectors 401-407 according to an example useful for understanding embodiments of the present disclosure. As seen from Fig. 7, the flat fastening surface 44 can be lower than the joint area 49, e.g., in the transfer connector 402; the flat fastening surface 44 can be formed as several surface for sank holes, e.g., in the transfer connectors 403 and 404; the flat fastening surface 44 may be arranged without damaging the joint area 49, to provide more current-carrying segments, e.g., in the transfer connectors 404-406; the transfer connector may also be formed as two separate parts, e.g., in the transfer connector 407. In implementations, those skilled in the art the flat fastening surface 44 and the flat attaching surface 46 may be achieved by any appropriate machine manufacturing methods.

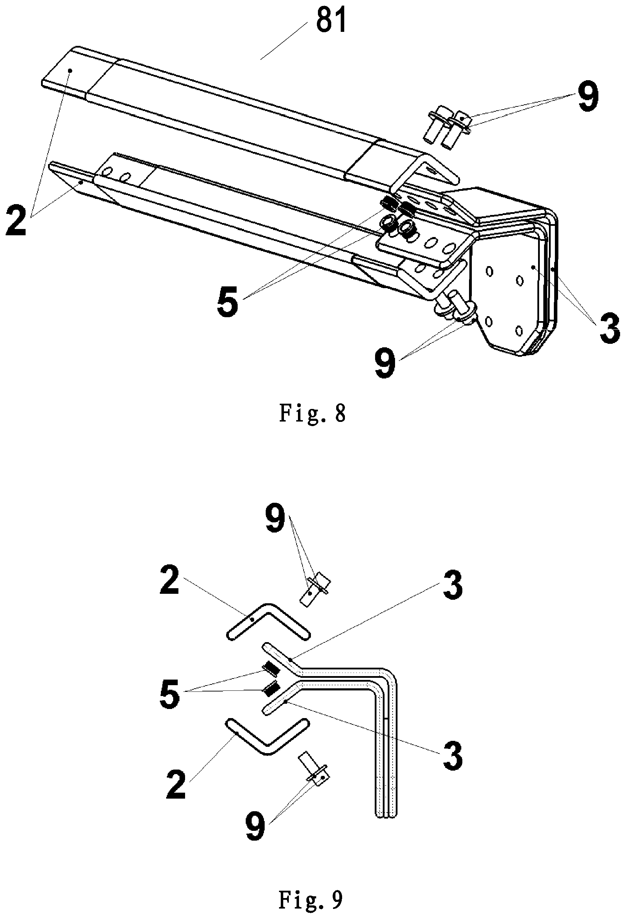

Next, reference will be made to Figs. 8 to 11 to describe several exemplary attaching arrangements between a pair of V-shaped main bus-bar 2 illustrated as examples useful for understanding the invention and a branch bus-bar 3, according to embodiments of the present disclosure.

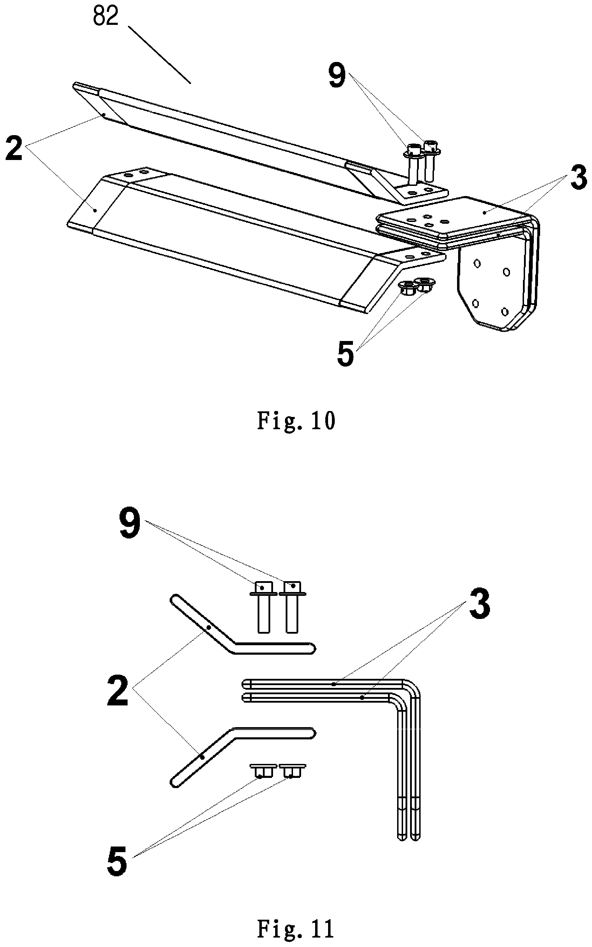

Fig. 8 schematically illustrates a perspective view of a unilateral attaching arrangement (i.e., a bus-bar assembly) between the pair of V-shaped main bus-bar 2 and the branch bus-bar 3, in a face to face way, and Fig. 9 schematically illustrates a side view of the attaching arrangement illustrated in Fig. 8. Figs. 10 and 11 schematically illustrate a unilateral attaching arrangement between the pair of V-shaped main bus-bar 2 and the branch bus-bar 3 in a back to back way. In Figs. 8-11, the pair of V-shaped main bus-bar 2 is fixed with the branch bus-bar 3 by means of screws 9 and nuts 5.

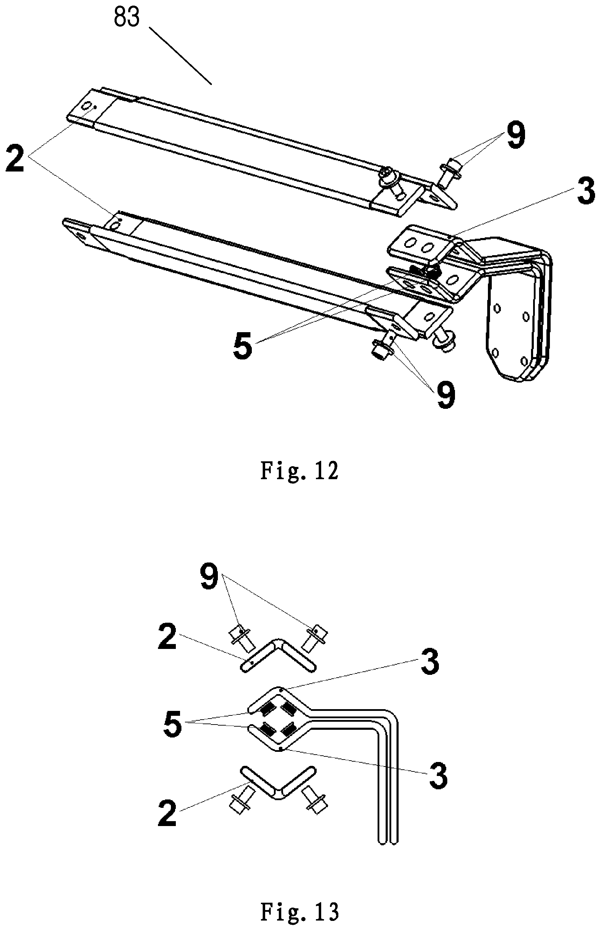

Next, reference will be made to Figs. 12 to 13 to describe an exemplary attaching arrangement between a pair of V-shaped main bus-bar 2 illustrated as an example useful for understanding the invention and a branch bus-bar 3, according to an embodiment of the present disclosure.

Fig. 12 schematically illustrates a perspective view of a bilateral attaching arrangement between the pair of V-shaped main bus-bar 2 and the branch bus-bar 3, in a face to face way, and Fig. 13 schematically illustrates a side view of the attaching arrangement illustrated in Fig. 12. In Figs. 12-13, the pair of V-shaped main bus-bar 2 is fixed with the branch bus-bar 3 by means of screws 9 and nuts 5.

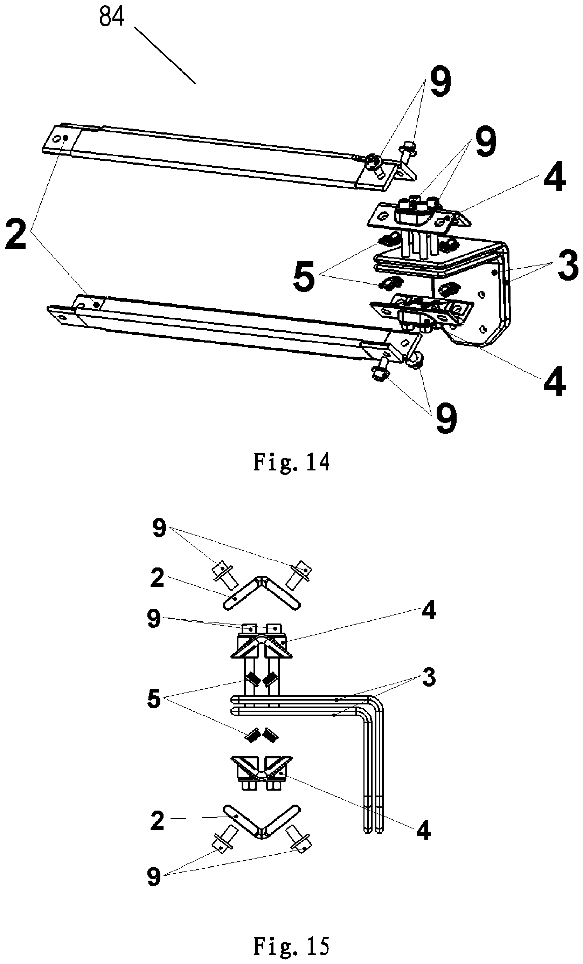

Next, reference will be made to Figs. 14 to 15 to describe an exemplary attaching arrangement (i.e., another bus-bar assembly) between a pair of V-shaped main bus-bar 2 illustrated as an example useful for understanding the invention and a branch bus-bar 3 by means of a transfer connector 4, according to an embodiment of the present disclosure.

Fig. 14 schematically illustrates a perspective view of a bilateral attaching arrangement using a transfer connector 4 between the pair of V-shaped main bus-bar 2 and the branch bus-bar 3, in a face to face way, and Fig. 15 schematically illustrates a side view of the attaching arrangement illustrated in Fig. 14. In Figs. 14-15, the fixing between the pair of V-shaped main bus-bar 2 and the transfer connector 4, and the fixing between transfer connector 4 and the branch bus-bar 3 is by means of screws 9 and nuts 5.

In an embodiment, the thread in the through-holes as mentioned above, e.g., holes 221, 222, 33, 43, 45, may be achieved by means of a welded nut or a wire thread. Preferably, the thread may be achieved by an embedded nut. In so doing, the mechanical strength achieved is higher than the welded nut or the wire thread.

Advantageously, the use of the branch bus-bar and the transfer connector described in this disclosure can make the attachment with the V-shaped main bus-bar feasibly and simply, and can make the V-shaped main bus-bar attach to the existing planar branch bus-bars.

Hereinbefore, the description has been made with reference to the exemplary structure of the V-shaped main bus-bar, the branch bus-bar and the transfer connector. However, the present disclosure is not limited thereto. In fact, there might be many variations and modifications to the embodiments of the present disclosure, as defined by the appended claims.

Various modifications, adaptations to the foregoing exemplary embodiments of this disclosure may become apparent to those skilled in the relevant arts in view of the foregoing description, when read in conjunction with the accompanying drawings. Any and all modifications will still fall within the scope of the non-limiting and exemplary embodiments of this disclosure, as defined by the appended claims. Furthermore, other embodiments of the disclosures set forth herein will come to mind to one skilled in the art to which these embodiments of the disclosure, as defined by the appended claims, pertain having the benefit of the teachings presented in the foregoing descriptions and the associated drawings.

Therefore, it is to be understood that the embodiments of the disclosure are not to be limited to the specific embodiments disclosed and that modifications and other embodiments are intended to be included within the scope of the appended claims. Although specific terms are used herein, they are used in a generic and descriptive sense only and not for purposes of limitation.

## Claims

1. A bus-bar assembly (81, 82, 83) comprising,
a main bus-bar (2) consisting of a first elongated flat portion (21, 21') and a second elongated flat portion (22, 22'), wherein a longitudinal side of the first elongated flat portion (21, 21') and a longitudinal side of the second elongated flat portion (22, 22') are joined with each other at a predetermined angle (α) such that the main bus-bar is V-shaped, wherein a thickness of each of said first elongated flat portion (21, 21') and said second elongated flat portion (22, 22') is non-uniform such that the thickness of each of said first elongated flat portion (21, 21') and said second elongated flat portion (22, 22') is gradually increased or decreased away from a joint area of said first elongated flat portion (21,21') and said second elongated flat portion (22, 22'); and
a branch bus-bar (3) comprising one or more planar portions (34, 35) for connecting with an electrical component and one or more bending segments (31, 32) extended from the planar portion,
wherein at least one of the first and second elongated flat portions of the main bus-bar (2) are arranged to be attached to the respective bending segments of the branch bus-bar (3).

2. The bus-bar assembly according to Claim 1, wherein a width of said first elongated flat portion (21, 21') is equal to that of said second elongated flat portion (22, 22').

3. The bus-bar assembly according to any one of Claims 1-2, wherein the other longitudinal side (27) of at least one of the first elongated flat portion (21, 21') and the second elongated flat portion (22, 22'), opposite to the joint area, is provided with a rounded flange (2612, 2614), a thickness of which is wider than that of the rest of the respective elongated flat portion, typically wherein the rounded flange (2612, 2614) is provided with an internal groove (2616).

4. The bus-bar assembly according to any one of Claims 1-3, wherein a longitudinal end (28) of the first elongated flat portion (21, 21') and/or a longitudinal end of the second elongated flat portion (22, 22') are rounded, and wherein a joint area formed between said first elongated flat portion (21, 21') and said second elongated flat portion (22, 22') is rounded.

5. The bus-bar assembly according to any one of Claims 1-4, wherein a groove (24) is provided at an end of the joint area formed between said first elongated flat portion (21, 21') and said second elongated flat portion (22, 22').

6. The bus-bar assembly according to any one of Claims 1-5, wherein a middle segment of said first elongated flat portion (21, 21') and/or said second elongated flat portion (22, 22') is coated with an electrical insulation composite (23).

7. The bus-bar assembly according to any one of Claims 1-6, wherein
a longitudinal end (28) of the first elongated flat portion and/or a longitudinal end of the second elongated flat portion are provided with one or more first through-holes (221, 222) in which a thread is provided,
said bending segments (21, 32) are provided with one or more second through-holes (33) with a thread therein, and
the respective elongated flat portion of the main bus-bar (2) is attached to the respective bending segment of the branch bus-bar (3) via the respective first and second through-holes by means of a bolt structure.

8. A bus-bar system comprising two bus-bar assemblies according to any one of Claims 1-7, wherein at least one of the first elongated flat portion and the second elongated flat portion of the main bus-bar of the first bus-bar assembly is arranged to be parallel to respective one of the first elongated flat portion and the second elongated flat portion of the main bus-bar of the second bus-bar assembly.

## Patentansprüche

1. Sammelschienenanordnung (81, 82, 83), umfassend:
eine Hauptsammelschiene (2), die aus einem ersten längserstreckten flachen Abschnitt (21, 21') und einem zweiten längserstreckten flachen Abschnitt (22, 22') besteht, wobei eine Längsseite des ersten längserstreckten flachen Abschnitts (21, 21') und eine Längsseite des zweiten längserstreckten flachen Abschnitts (22, 22') in einem vorgegebenen Winkel (α) so verbunden sind, dass die Hauptsammelschiene V-förmig ist, wobei eine jeweilige Dicke des ersten längserstreckten flachen Abschnitts (21, 21') und des zweiten längserstreckten flachen Abschnitts (22, 22') so uneinheitlich ist, dass die jeweilige Dicke des ersten längserstreckten flachen Abschnitts (21, 21') und des zweiten längserstreckten flachen Abschnitts (22, 22') allmählich von einem Verbindungsbereich des ersten längserstreckten flachen Abschnitts (21, 21') und des zweiten längserstreckten flachen Abschnitts (22, 22') weg zunimmt oder abnimmt, und
eine abzweigende Sammelschiene (3), die einen oder mehrere planare Abschnitte (34, 35) zum Anschließen an eine elektrische Komponente und ein oder mehrere Biegesegmente (31, 32) umfasst, die sich von dem planaren Abschnitt erstrecken,
wobei wenigstens einer von dem ersten und dem zweiten längserstreckten flachen Abschnitt der Hauptsammelschiene (2) so angeordnet ist, dass er an den entsprechenden Biegesegmenten der abzweigenden Sammelschiene (3) anzubringen ist.

2. Sammelschienenanordnung nach Anspruch 1, wobei eine Breite des ersten längserstreckten flachen Abschnitts (21, 21') gleich der des zweiten längserstreckten flachen Abschnitts (22, 22') ist.

3. Sammelschienenanordnung nach einem der Ansprüche 1 bis 2, wobei die andere Längsseite (27) wenigstens eines von dem ersten längserstreckten Abschnitt (21, 21') und dem zweiten längserstreckten Abschnitt (22, 22') gegenüber dem Verbindungsbereich mit einem abgerundeten Flansch (2612, 2614) versehen ist, dessen Dicke breiter als die des Rests des entsprechenden längserstreckten flachen Abschnitts ist, wobei typischerweise der abgerundete Flansch (2612, 2614) mit einer innenliegenden Rille (2616) versehen ist.

4. Sammelschienenanordnung nach einem der Ansprüche 1 bis 3, wobei ein Längsende (28) des ersten längserstreckten flachen Abschnitts (21, 21') und/oder ein Längsende des zweiten längserstreckten flachen Abschnitts (22, 22') abgerundet sind bzw. ist und wobei ein Verbindungsbereich, der zwischen dem ersten längserstreckten flachen Abschnitt (21, 21') und dem zweiten längserstreckten flachen Abschnitt (22, 22') ausgebildet ist, abgerundet ist.

5. Sammelschienenanordnung nach einem der Ansprüche 1 bis 4, wobei an einem Ende des Verbindungsbereichs, der zwischen dem ersten längserstreckten flachen Abschnitt (21, 21') und dem zweiten längserstreckten flachen Abschnitt (22, 22') ausgebildet ist, eine Rille (24) vorgesehen ist.

6. Sammelschienenanordnung nach einem der Ansprüche 1 bis 5, wobei ein mittleres Segment des ersten längserstreckten flachen Abschnitts (21, 21') und/oder des zweiten längserstreckten flachen Abschnitts (22, 22') mit einem elektrisch isolierenden Verbundwerkstoff (23) beschichtet ist.

7. Sammelschienenanordnung nach einem der Ansprüche 1 bis 6, wobei
ein Längsende (28) des ersten längserstreckten flachen Abschnitts und/oder ein Längsende des zweiten längserstreckten flachen Abschnitts mit einer oder mehreren ersten Durchgangsbohrungen (221, 222), in denen ein Gewinde vorgesehen ist, versehen sind bzw. ist,
die Biegesegmente (21, 32) mit einer oder mehreren zweiten Durchgangsbohrungen (33) mit einem Gewinde in denselben versehen sind und
der entsprechende längserstreckte flache Abschnitt der Hauptsammelschiene (2) an dem entsprechenden Biegesegment der abzweigenden Sammelschiene (3) über die entsprechenden ersten und zweiten Durchgangsbohrungen mittels einer Bolzenstruktur angebracht ist.

8. Sammelschienensystem, umfassend zwei Sammelschienenanordnungen nach einem der Ansprüche 1 bis 7, wobei wenigstens einer von dem ersten längserstreckten flachen Abschnitt und dem zweiten längserstreckten flachen Abschnitt der Hauptsammelschiene der ersten Sammelschienenanordnung so angeordnet ist, dass er parallel zu dem entsprechenden des ersten längserstreckten flachen Abschnitts und des zweiten längserstreckten flachen Abschnitts der Hauptsammelschiene der zweiten Sammelschienenanordnung verläuft.

## Revendications

1. Jeu de barres omnibus (81, 82, 83), comprenant :
une barre omnibus principale (2) constituée d'une première partie plate allongée (21, 21') et d'une seconde partie plate allongée (22, 22'), un côté longitudinal de la première partie plate allongée (21, 21') et un côté longitudinal de la seconde partie plate allongée (22, 22') étant réunis l'un à l'autre à un angle prédéterminé (α) de telle sorte que la barre omnibus principale est en forme de V, une épaisseur de chacune de ladite première partie plate allongée (21, 21') et de ladite seconde partie plate allongée (22, 22') étant non uniforme de telle sorte que l'épaisseur de chacune de ladite première partie plate allongée (21, 21') et de ladite seconde partie plate allongée (22, 22') est progressivement augmentée ou diminuée en s'éloignant d'une zone de jonction de ladite première partie plate allongée (21, 21') et de ladite seconde partie plate allongée (22, 22') ; et
une barre omnibus de dérivation (3) comprenant une ou plusieurs parties planes (34, 35) pour la connexion avec un composant électrique et un ou plusieurs segments de flexion (31, 32) s'étendant à partir de la partie plane,
dans lequel au moins une des première et seconde parties plates allongées de la barre omnibus principale (2) est disposée de manière à être fixée aux segments de flexion respectifs de la barre omnibus de dérivation (3).

2. Jeu de barres omnibus selon la revendication 1, dans lequel une largeur de ladite première partie plate allongée (21, 21') est égale à celle de ladite seconde partie plate allongée (22, 22').

3. Jeu de barres omnibus selon l'une quelconque des revendications 1 et 2, dans lequel l'autre côté longitudinal (27) d'au moins l'une de la première partie plate allongée (21, 21') et de la seconde partie plate allongée (22, 22'), opposé à la zone de jonction, est pourvu d'une bride arrondie (2612, 2614), dont l'épaisseur est plus importante que celle du reste de la partie plate allongée respective, typiquement dans lequel la bride arrondie (2612, 2614) est pourvue d'une rainure interne (2616).

4. Jeu de barres omnibus selon l'une quelconque des revendications 1 à 3, dans lequel une extrémité longitudinale (28) de la première partie plate allongée (21, 21') et/ou une extrémité longitudinale de la seconde partie plate allongée (22, 22') sont arrondies, et dans lequel une zone de jonction formée entre ladite première partie plate allongée (21, 21') et ladite seconde partie plate allongée (22, 22') est arrondie.

5. Jeu de barres omnibus selon l'une quelconque des revendications 1 à 4, dans lequel une rainure (24) est prévue au niveau d'une extrémité de la zone de jonction formée entre ladite première partie plate allongée (21, 21') et ladite seconde partie plate allongée (22, 22').

6. Jeu de barres omnibus selon l'une quelconque des revendications 1 à 5, dans lequel un segment central de ladite première partie plate allongée (21, 21') et/ou de ladite seconde partie plate allongée (22, 22') est revêtu d'un composite d'isolation électrique (23).

7. Jeu de barres omnibus selon l'une quelconque des revendications 1 à 6, dans lequel :
une extrémité longitudinale (28) de la première partie plate allongée et/ou une extrémité longitudinale de la seconde partie plate allongée sont pourvues d'un ou de plusieurs premiers trous traversants (221, 222) dans lesquels un filetage est prévu,
lesdits segments de flexion (21, 32) sont munis d'un ou de plusieurs seconds trous traversants (33) dans lesquels se trouve un filetage, et
la partie plate allongée respective de la barre omnibus principale (2) est fixée au segment de flexion respectif de la barre omnibus de dérivation (3) par les premier et second trous traversants respectifs au moyen d'une structure à boulons.

8. Système de barres omnibus comprenant deux jeux de barres omnibus selon l'une quelconque des revendications 1 à 7, dans lequel au moins l'une de la première partie plate allongée et de la seconde partie plate allongée de la barre omnibus principale du premier jeu de barres omnibus est agencée pour être parallèle à une partie respective parmi la première partie plate allongée et la seconde partie plate allongée de la barre omnibus principale du second jeu de barres omnibus.
